# EUROPEAN PATENT APPLICATION

(11) **EP 4 086 128 A1**
(43) Date of publication of application: **09.11.2022**
(21) Application number: 21812202.6
(22) Date of filing: 20.05.2021
(51) Int. Cl.: B60W 30/06

(54) **ENGINEERING VEHICLE AUTONOMOUS PARKING SYSTEM AND AUTONOMOUS PARKING METHOD SUITABLE FOR CONSTRUCTION AREA**

(30) Priority: 26.05.2020 CN 202010456267
(71) Applicant: Sany Special Purpose Vehicle Co., Ltd., Hunan 422000 (CN)
(72) Inventor: HE, Zhiguo, Shaoyang, Hunan 422000 (CN); LIU, Zhu, Shaoyang, Hunan 422000 (CN); ZHANG, Kejun, Shaoyang, Hunan 422000 (CN)
(74) Representative: DREISS Patentanwälte PartG mbB
(86) International application number: PCT/CN2021/094740
(87) International publication number: WO 2021/238748

(57) **Abstract**

An engineering vehicle autonomous parking system and autonomous parking method suitable for a construction area. The engineering vehicle autonomous parking system comprises a vehicle unit and a marking unit; the marking unit is movably or detachably provided in a construction area, and the marking unit records parking space information; and the vehicle unit comprises a vehicle body, a radar (4), an information acquisition device (6), a positioning device (8), a sensing device (10), and a control device (12), the control device (12) being in communication connection with the radar (4), the information acquisition device (6), the positioning device (8), the sensing device (10) and the vehicle body.

## Description

This application claims priority to Chinese Patent Application No. 202010456267.7 filed with China National Intellectual Property Administration on May 26, 2020 and entitled "Engineering Vehicle Autonomous Parking System and Autonomous Parking Method Suitable For Construction Area", the entire contents of which are herein incorporated by reference.

### FIELD

The present invention relates to the technical field of engineering vehicles, in particular, to an engineering vehicle autonomous parking system and an autonomous parking method suitable for construction area.

### BACKGROUND

In the parking process of engineering vehicles, due to the harsh environment in the construction area, the traffics of people and vehicles are mixed, and mixer trucks have a large blind spot when the mixer trucks are parked, which can easily cause safety accidents. Existing engineering vehicle parking is basically completed by man power. Drivers need to be highly focused when parking. When encountering a particularly complex parking situation, drivers further need to get off the vehicles halfway to check surrounding conditions before continuing parking. This leads to long parking time and low parking efficiency and may easily cause safety accidents.

In particular, the mixer truck is an engineering vehicle used to transport concrete. During the transportation process, the mixing drum on the truck needs to keep rotating continuously to prevent the concrete from solidifying, which limits the driver's sight and further increase parking difficulty.

Meanwhile, the parking space in the construction area generally does not comprise any parking space marking, and the position of the parking area in the construction area changes as the construction progresses, that is, in a period of time, the parking area may be this area, while may be another area in another period of time.

Therefore, for those skilled in the art, how to provide an autonomous parking system and an autonomous parking method suitable for construction areas has become a technical problem that needs to be solved urgently in this field.

### SUMMARY

The present invention aims to solve at least one of the technical problems in the prior art or related art.

Thus, according to a first aspect of the present invention, an engineering vehicle autonomous parking system suitable for construction area is provided.

According to a second aspect of the present invention, an autonomous parking method is provided.

In view of this, the present invention provides an engineering vehicle autonomous parking system suitable for construction area, and it comprises: a vehicle unit and a marking unit, wherein the marking unit is movably or detachably provided in a construction area, and the marking unit records parking space information, and the vehicle unit comprises a vehicle body; a radar provided on the vehicle body, wherein the radar is adapted to obtain obstacle information; an information acquisition device provided on the vehicle body, wherein the information acquisition device is adapted to acquire the parking space information that the marking unit records and/or obtain obstacle information; a positioning device provided on the vehicle body, wherein the positioning device is adapted to obtain vehicle position information of the vehicle body; a sensing device provided on the vehicle body, wherein the sensing device is adapted to obtain operating information of a vehicle; and a control device provided on the vehicle body, wherein the control device is in communication connection with the radar, the information acquisition device, the positioning device, the sensing device and the vehicle body; and the control device is adapted to control the vehicle body to autonomously park in a parking space based on the obstacle information, the vehicle position information, the parking space information and the operating information.

For the engineering vehicle autonomous parking system suitable for construction area provided by the present invention, in a parking process, the parking space information that the marking unit records is acquired through the information acquisition device, the obstacle information regarding whether an obstacle exists in the parking travel path of an engineering vehicle is obtained through the radar, the vehicle position information regarding the location of the vehicle body is obtained through the positioning device, and furthermore, the control device determines a parking path based on the parking space information, the obstacle information and the vehicle position information, and obtains the traveling state of the vehicle through the operating information, and thus, the vehicle body can be controlled to travel along the parking path based on the operating information, and then the vehicle body is parked in the parking space. The engineering vehicle provided in the present invention can achieve autonomous parking, which substitutes the traditional embodiment that vehicle parking is controlled by a driver, thereby greatly improving the efficiency and the safety of parking.

For the engineering vehicle autonomous parking system suitable for construction area provided by the present invention, through the arrangement of the marking unit, the marking unit is used to record the parking space information; the marking unit of the construction area can be disposed dynamically according to the variations of the construction area; a dynamical arrangement for the parking space is achieved by dynamically disposing the marking unit, i.e., a dynamical planning for the parking area is achieved.

Specifically, for the engineering vehicle autonomous parking system provided by the present invention, considering the harsh environment in the construction area of engineering vehicles, there are generally no clear or definite parking space markings at the parking space for engineering vehicles, and thus, the information acquisition device is provided to acquire the parking space information that the marking unit records, which helps the engineering vehicles obtain the position and the type of the parking space and further helps the engineering vehicles autonomously park in the parking space.

Specifically, for the engineering vehicle autonomous parking system provided by the present invention, through the arrangement of the radar, the obstacle information can be monitored and obtained, and this prevents the engineering vehicles from colliding with obstacles and then prevents causing safety accidents during the parking process, and therefore, the engineering vehicle autonomous parking system provided by the present invention achieves safer and more reliable parking.

Specifically, the radar can be a supersonic wave radar, and multiple radars can be arranged; multiple radars are divided into multiple groups and are distributed on the front end, the rear end and the two sides of the vehicle body. The arrangement of the multiple groups of radars makes the sensing range of the engineering vehicles wider and improves the convenience and the safety of the engineering vehicle parking.

Specifically, according to the present invention, the marking unit is movably or detachably provided in the construction area, and then the arrangement of the marking unit does not affect the construction or the situation of the engineering vehicle.

In addition, the engineering vehicle autonomous parking system in the above embodiment provided by the present invention can further comprise the following additional technical features.

In the above embodiment, furthermore, the positioning device comprises: an inertial measurement unit provided on the vehicle body; and a GPS positioning device provided on the vehicle body.

In the embodiment, the composition of the positioning device is further provided. The positioning device comprises the inertial measurement unit and the GPS positioning device. Through the combined use of the inertial measurement unit and the GPS positioning device, and through the performance complementation of the inertial measurement unit and the GPS positioning device, the positioning accuracy of the engineering vehicle is improved, and this helps the control device get the position of the vehicle body, and helps the control device control the vehicle body to park in the parking space.

In any one of the above embodiments, furthermore, the sensing device comprises: at least one of a wheel speed sensor, a steering angle sensor and a steering torque sensor; and/or the information acquisition device comprises an image acquisition device provided on the vehicle body, and/or a vehicle networking device, wherein an on-board unit of the vehicle networking device is provided on the vehicle body.

In the embodiment, the composition of the sensing device is further provided, and the sensing device comprises at least one of the wheel speed sensor, the steering angle sensor and the steering torque sensor. During a working process, the wheel speed sensor is adapted to obtain the wheel speed of the vehicle body, the steering angle sensor is adapted to obtain the turning angle of the steering wheel of the vehicle body, and the steering torque sensor is adapted to obtain the steering torque of the steering wheel. Through obtaining the wheel speed, the turning angle and the steering torque of the vehicle body, the travelling state of the vehicle body can be obtained, and then the control device can provide control parameters based on the wheel speed, the turning angle and the steering torque of the vehicle body, and then the vehicle body travels along the parking path until the vehicle body parks in the parking space, thereby achieving the autonomous parking, and thus, the efficiency and the safety of parking is greatly improved.

Specifically, the control device can comprise a computing device and a wire-controlled chassis device, and the wire-controlled chassis device is in communication connection with the computing device. During the parking process, the computing device determines the parking path through the parking space information, the obstacle information and the vehicle position information. The wire-controlled chassis device generates a throttle value for controlling the size of the throttle, a braking value for controlling the magnitude of braking and the turning angle of the steering wheel based on the parking path and the operating information, and then the vehicle body can travel along the parking path until the vehicle body parks in the parking space.

In the embodiment, the specific types of the information acquisition device are further provided. The information acquisition device can comprise the image acquisition device and/or the on-board unit. When the information acquisition device comprises the image acquisition device, a two-dimensional code mark can be disposed in the parking space, the two-dimensional code mark corresponds to the parking space information, then the image acquisition device acquires the two-dimensional code mark, and thus the parking space information can be obtained; when the information acquisition device is a vehicle networking device (V2X device), a road-side unit (RSU) of the vehicle networking device can be provided in the parking space, and the road-side unit (RSU) is adapted to send the parking space information and the parking space information is thereby received when the on-board unit (OBU) of the vehicle networking device is close to the road-side unit.

Specifically, the image acquisition device is a 360-degree panoramic camera, and there can be multiple 360-degree panoramic cameras which are distributed on the front end, the rear end and the two sides of the vehicle body. The 360-degree panoramic cameras can further be used in combination with the radar to obtain the obstacle information while they are used to obtain the parking space information. Through the arrangement of the multiple 360-degree panoramic cameras, the sensing range of the engineering vehicle becomes wider and this helps improve the convenience and the safety of the engineering vehicle parking.

In any one of the above embodiments, furthermore, the marking unit further comprises a movable pile, wherein the movable pile is movably or detachably provided in the construction area; the two-dimensional code mark provided on the movable pile, wherein the two-dimensional code mark records the parking space information, and the information acquisition device is adapted to acquire the parking space information that the two-dimensional code mark records; and/or the road-side unit of the vehicle networking device provided on the movable pile, wherein the road-side unit records the parking space information, and the information acquisition device is adapted to acquire the parking space information that the road-side unit records.

In the embodiment, the composition of the marking unit is further provided. The marking unit comprises the movable pile and the two-dimensional code mark provided on the movable pile. The movable or detachable arrangement of the movable pile prevents the movable pile from affecting the operation of engineering vehicles, and meanwhile helps dynamically dispose the marking unit of the construction area. The arrangement of the two-dimensional code mark and the road-side unit of the vehicle networking device helps the information acquisition device of the vehicle unit acquire and obtain parking space information.

According to the second aspect of the present invention, an autonomous parking method for the engineering vehicle autonomous parking system according to any one of the above embodiments, and the method comprises: obtaining parking space information through an information acquisition device; analyzing the parking space information to obtain parking parameter information; determining a parking start-point according to the parking parameter information and the position information of an engineering vehicle; determining a parking path according to the parking parameter information and the parking start-point; and controlling the engineering vehicle to park in a parking space according to the parking path.

For the parking method provided by the present invention, in the parking process, the parking space information is acquired and obtained by the information acquisition device of the engineering vehicle, the parking space information is analyzed to obtain the parking space parameter information, parking start-point information is determined based on parking space parameter information and the position information of the engineering vehicle, furthermore, the parking path is determined based on the parking parameter information and the parking start-point, and thus, the control device of the engineering vehicle can control the vehicle body to park in the parking space along the parking path, the autonomous parking of the engineering vehicle is achieved and the efficiency and the safety of the engineering vehicle parking is greatly improved.

For the autonomous parking method provided by the present invention, the parking space information is acquired and obtained by the information acquisition device, and then the parking space information is analyzed to obtain the parking space parameter information; on the one hand, considering the harsh environment in the construction area of engineering vehicles, there are generally no clear or definite parking space markings at the parking space for an engineering vehicle, and thus, the information acquisition device is provided to acquire the parking space information, which helps the engineering vehicles obtain the parking space parameter information and further help the engineering vehicles autonomously park in the parking space; on the other hand, the timeliness and the speed of obtaining the parking space information are improved, and further analysis is performed to obtain the parking space parameter information to facilitate the parking of the engineering vehicle.

It can be understood that in the autonomous parking method provided by the present invention, the position of the parking start-point can be a point that coincides with the position of the engineering vehicle or other points by which the engineering vehicle can park in the parking space.

In addition, the autonomous parking method for the engineering vehicle autonomous parking system in the above embodiment provided by the present invention can further comprise the following additional technical features.

In the above embodiment, furthermore, the parking parameter information comprises at least one type of parking space position information, parking space type information, parking space length information, parking space width information and parking space height information.

In the embodiment, the composition of the parking parameter information is further provided. The parking parameter information comprises at least one type of the parking space position information, the parking space type information, the parking space length information, the parking space width information and the parking space height information. The parking space position information is used to indicate the position of the parking space, and thus a control device of the engineering vehicle can park the engineering vehicle in the parking space based on the position of the vehicle and the parking space position information; the parking space type information specifically indicates the types of the parking space, for example, a parallel parking space, a vertical parking space and a diagonal parking space, for indicating the parking mode of the engineering vehicle; the parking space length information, the parking space width information and the parking space height information are used to indicate the size and the height of the parking space, and then prevent a portion of the engineering vehicles from going beyond the parking range of the parking space.

In any one of the above embodiments, furthermore, the step of determining a parking path based on the parking parameter information and the parking start-point specifically comprises: determining a preset parking path through a Hybrid A^{∗} algorithm according to the parking parameter information and the parking start-point; determining whether an obstacle exists on the preset parking path by means of a radar; in the case that an obstacle exists on the preset parking path, determining whether the obstacle is moving; in the case that the obstacle does not move, generating an expanded parking start-point based on the parking start-point, and determining a target parking path based on the expanded parking start-point and the parking parameter information; in the case that the obstacle is moving, controlling the vehicle body to stop operating until the obstacle is away from the preset parking path, and implementing a smoothing treatment for the preset parking path according to a conjugate gradient method to obtain the parking path; in the case that there is no obstacle on the preset parking path, implementing a smoothing treatment for the preset parking path according to a conjugate gradient method to obtain the parking path; wherein generating an expanded parking start-point based on the parking start-point comprises using a Reeds-Shepp curve to expand the parking start-point to generate an expanded parking start-point.

In the embodiment, the specific steps for determining the parking path are further provided. The preset parking path is determined through the Hybrid A^{∗} algorithm according to the parking parameter information and the parking start-point. When a moving obstacle exists on the preset parking path, a smoothing treatment for the preset parking path is implemented after the obstacle is away from the preset parking path, and then the parking path is obtained; when the obstacle existing on the preset parking path does not move, the expanded parking start-point is generated and the target parking path is determined based on the expanded parking start-point and the parking parameter information, and until the obstacle does not exist on the target parking path, the smoothing treatment is implemented to the target parking path according to the conjugate gradient method to obtain the parking path; in the case that there is no obstacle on the preset parking path, the smoothing treatment is implemented to the preset parking path according to the conjugate gradient method, and then the parking path can be obtained. Through the above arrangement, a parking path free from any obstacle is finally obtained, and this helps the engineering vehicle park in the parking space safely and quickly.

In the embodiment, the generating mode of the expanded parking start-point is further provided. Expanding the parking start-point by the Reeds-Shepp curve helps quickly generate the expanded parking start-point, and meanwhile, the newly generated expanded parking start-point is relatively close to the parking start-point and thus it is conducive to the quick parking of the engineering vehicle.

In any one of the above embodiments, furthermore, obtaining the parking space information comprises: scanning the two-dimensional code mark provided in the parking space by means of an image acquisition device on an engineering vehicle to obtain parking space information; or receiving parking space information sent by the road-side unit of the vehicle networking device disposed in the parking space by means of the on-board unit of the vehicle networking device on an engineering vehicle.

In the embodiment, the method for obtaining the parking space information is further provided. Through the cooperation of the image acquisition device and the two-dimensional code mark, or through the mutual cooperation of the on-board unit and the road-side unit provided in the parking space, the efficiency for obtaining the parking space information is improved.

Specifically, a benchmark can be provided in the parking space, the two-dimensional code mark is provided on the benchmark, and then the image acquisition device scans the two-dimensional code mark to obtain the parking space information.

In any one of the above embodiments, furthermore, they further comprise: sending flameout prompt information when the engineering vehicle is parked in the parking space.

In the embodiment, in the case that the engineering vehicle is parked in the parking space, the flameout prompt information is sent, and this helps shut down engineering vehicles in time and save energy.

Specifically, when a driver is in the engineering vehicle, the driver can manually shut down the engineering vehicle after being informed of the flameout prompt information; if there is no driver in the engineering vehicle, the control device of the engineering vehicle can receive the flameout prompt information and shut down the engineering vehicle based on the flameout prompt information.

In any one of the above embodiments, furthermore, the step of controlling the engineering vehicle to park in the parking space according to the parking path specifically comprises: obtaining the vehicle position information of the engineering vehicle through a positioning device; obtaining parking map information by means of a simultaneous localization and mapping technology in a moving process of the engineering vehicle; and controlling the engineering vehicle to park in the parking space according to the vehicle position information, the parking map information and the parking path.

In the embodiment, the specific steps for the engineering vehicle to park in the parking space are further provided. Through acquiring the vehicle position information, the parking map information is obtained by means of a simultaneous localization and mapping (SLAM) technology in a moving process of the engineering vehicle, and thus it is convenient to get the position of the engineering vehicle and the map information of the parking space, and it helps the engineering vehicle park in the parking space along the parking path, thereby achieving autonomous parking of the engineering vehicle, replacing the embodiments in which a traditional driver controls the parking of a vehicle, and thereby greatly improving the efficiency and the safety of parking.

Additional aspects and advantages of the present invention will be obvious from the following description or can be understood from the implementation of the present invention.

### BRIEF DESCRIPTION OF THE DRAWINGS

The above and/or the additional aspects and advantages of the present invention will become obvious and will be understood easily from the following description of embodiments in combination with accompanying drawings, wherein:
FIG. 1 is a schematic view of the structure of an engineering vehicle according to an embodiment of the present invention;
FIG. 2 is a block diagram of the structure of an engineering vehicle according to an embodiment of the present invention;
FIG. 3 is a schematic view of a parking path of an engineering vehicle according to an embodiment of the present invention;
FIG. 4 is a schematic view of the flow of a parking method according to Embodiment 5 of the present invention;
FIG. 5 is a schematic view of the flow of a parking method according to Embodiment 6 of the present invention;
FIG. 6 is a schematic view of the flow of a parking method according to Embodiment 7 of the present invention;
FIG. 7 is a schematic view of the flow of a parking method according to Embodiment 8 of the present invention;
FIG. 8 is a schematic view of the flow of a parking method according to Embodiment 9 of the present invention;
FIG. 9 is a schematic view of the flow of a parking method according to Embodiment 10 of the present invention;
FIG. 10 is a schematic view of the flow of a parking method according to Embodiment 11 of the present invention;
FIG. 11 is a schematic view of the flow of a parking method according to Embodiment 12 of the present invention;
FIG. 12 is a block diagram of the structure of an engineering vehicle at a software level according to a specific embodiment of the present invention; and
FIG. 13 is a schematic view of the flow of step S4 of a parking method according to a specific embodiment of the present invention.

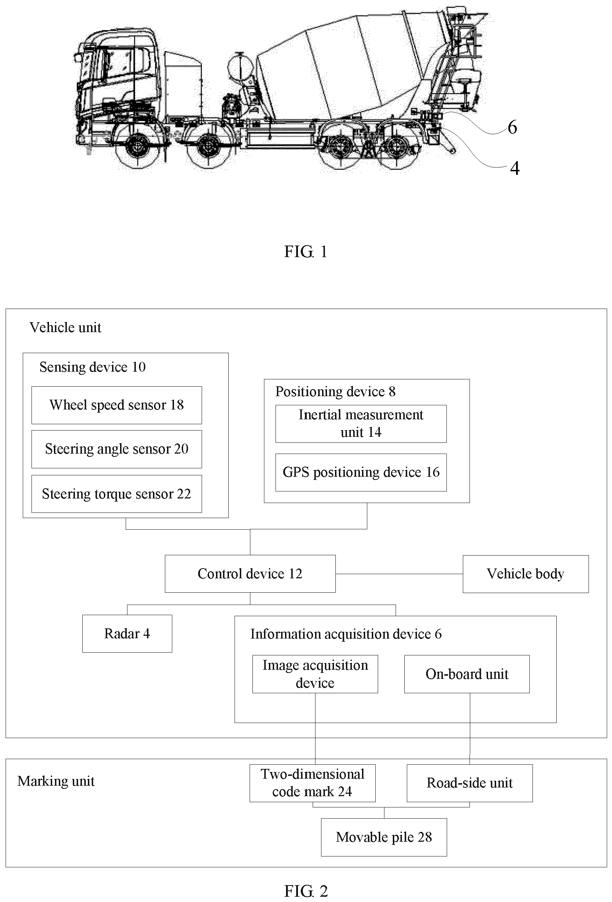

Wherein, the corresponding relations between the reference signs in FIG. 1 to FIG. 3 and FIG. 12 and the names of components are illustrated as follows:
4 radar; 6 information acquisition device; 8 positioning device; 10 sensing device; 12 control device; 14 inertial measurement unit; 16 GPS positioning device; 18 wheel speed sensor; 20 steering angle sensor; 22 steering torque sensor; 24 two-dimensional code mark; 26 parking space; 28 movable pile.

### DETAILED DESCRIPTION OF THE INVENTION

To more clearly understand the above objects, features and advantages of the present invention, the present invention will be further detailed hereinafter in combination with the accompanying drawings and embodiments. It should be indicated that in the case of no conflict, the embodiments and the features in the embodiments of the present invention can be combined with each other.

Details are illustrated in the following description for the convenience of a fully understanding to the present invention, but the present invention can further be implemented using other embodiments other than these described herein. Therefore, the protection scope of the present invention is not limited to the specific embodiments disclosed in the following text.

Referring to FIG 1 to FIG 13, an engineering vehicle autonomous parking system and an autonomous parking method suitable for construction area according to some embodiments of the present invention are described in the following.

### Embodiment 1

As shown in FIG 1 and FIG. 2, an embodiment of the present invention provides an engineering vehicle autonomous parking system suitable for construction area, and it comprises: a vehicle unit and a marking unit, wherein the marking unit is movably or detachably provided in a construction area, and the marking unit records parking space information, and the vehicle unit comprises a vehicle body; a radar 4 provided on the vehicle body, wherein the radar 4 is adapted to obtain obstacle information; an information acquisition device 6 provided on the vehicle body, wherein the information acquisition device 6 is adapted to acquire the parking space information that the marking unit records and/or obtain obstacle information; a positioning device 8 provided on the vehicle body, wherein the positioning device 8 is adapted to obtain vehicle position information of the vehicle body; a sensing device 10 provided on the vehicle body, wherein the sensing device 10 is adapted to obtain operating information of a vehicle; and a control device 12 provided on the vehicle body, wherein the control device 12 is in communication connection with the radar 4, the information acquisition device 6, the positioning device 8, the sensing device 10 and the vehicle body; and the control device 12 is adapted to control the vehicle body to autonomously park in a parking space based on the obstacle information, the vehicle position information, the parking space information and the operating information.

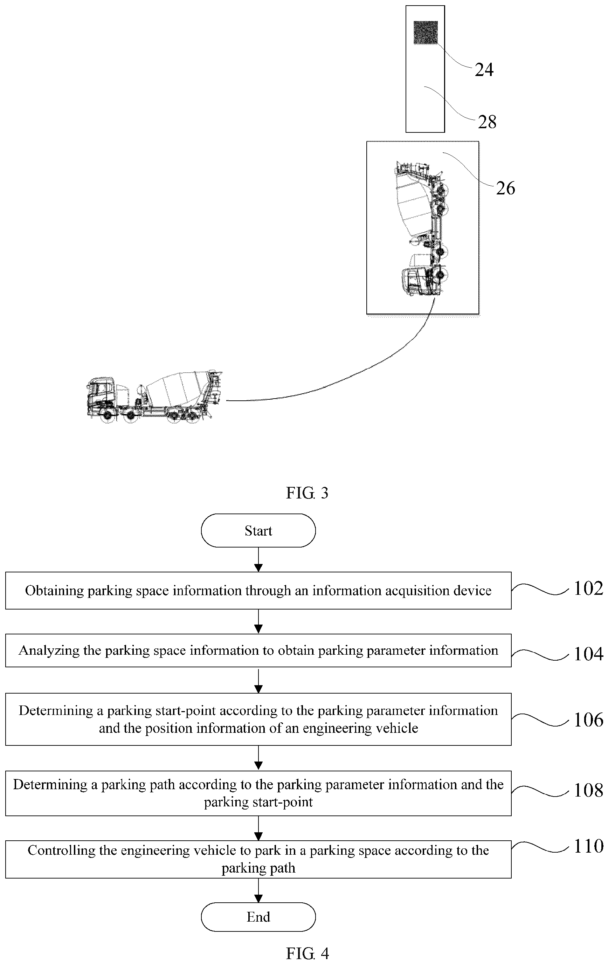

For the engineering vehicle autonomous parking system suitable for construction area provided by the present invention, as shown in FIG. 3, in a parking process, the parking space information that the marking unit records is acquired through the information acquisition device 6, the obstacle information regarding whether an obstacle exists in the parking travel path of an engineering vehicle is obtained through the radar 4, the vehicle position information regarding the location of the vehicle body is obtained through the positioning device 8, and furthermore, the control device 12 determines a parking path based on the parking space information, the obstacle information and the vehicle position information, and obtains the traveling state of the vehicle through the operating information, and thus, the vehicle body can be controlled to travel along the parking path based on the operating information, and then the vehicle body is parked in the parking space 26. The engineering vehicle provided in the present invention can achieve autonomous parking, which substitutes the traditional embodiment that vehicle parking is controlled by a driver, thereby greatly improving the efficiency and the safety of parking.

For the engineering vehicle autonomous parking system suitable for construction area provided by the present invention, through the arrangement of the marking unit, the marking unit is used to record the parking space information; the marking unit of the construction area can be disposed dynamically according to the variations of the construction area; a dynamical arrangement for the parking space is achieved by dynamically disposing the marking unit, i.e., a dynamical planning for the parking area is achieved.

Specifically, for the engineering vehicle autonomous parking system provided by the present invention, considering the harsh environment in the construction area of engineering vehicles, there are generally no clear or definite parking space markings at the parking space 26 for engineering vehicles, and thus, the information acquisition device 6 is provided to acquire the parking space information, which helps the engineering vehicles obtain the position and the type of the parking space 26 and further helps the engineering vehicles autonomously park in the parking space 26.

Specifically, for the engineering vehicle autonomous parking system provided by the present invention, through the arrangement of the radar 4 and the information acquisition device 6, the obstacle information can be monitored and obtained, and this prevents the engineering vehicles from colliding with obstacles and then prevents causing safety accidents during the parking process, and therefore, the engineering vehicle parking provided by the present invention is safer and more reliable.

Specifically, the radar 4 can be a supersonic wave radar, and multiple radars 4 can be arranged; multiple radars 4 are divided into multiple groups and are distributed on the front end, the rear end and the two sides of the vehicle body. The arrangement of the multiple groups of radars 4 makes the sensing range of the engineering vehicles wider and improves the convenience and the safety of the engineering vehicle parking.

Specifically, according to the present invention, the marking unit is movably or detachably provided in the construction area, and then the arrangement of the marking unit does not affect the construction or the situation of the engineering vehicle.

### Embodiment 2

As shown in FIG. 1 to FIG. 2, an embodiment of the present invention provides an engineering vehicle autonomous parking system suitable for construction area, and it comprises: a vehicle unit and a marking unit, wherein the marking unit is movably or detachably provided in a construction area, and the marking unit records parking space information, and the vehicle unit comprises a vehicle body; a radar 4 provided on the vehicle body, wherein the radar 4 is adapted to obtain obstacle information; an information acquisition device 6 provided on the vehicle body, wherein the information acquisition device 6 is adapted to acquire the parking space information that the marking unit records and/or obtain obstacle information; a positioning device 8 provided on the vehicle body, wherein the positioning device 8 is adapted to obtain the vehicle position information of the vehicle body; a sensing device 10 provided on the vehicle body, wherein the sensing device 10 is adapted to obtain the operating information of a vehicle; and a control device 12 provided on the vehicle body, wherein the control device 12 is in communication connection with the radar 4, the information acquisition device 6, the positioning device 8, the sensing device 10 and the vehicle body; and the control device 12 is adapted to control the vehicle body to autonomously park in a parking space 26 based on the obstacle information, the vehicle position information, the parking space information and the operating information.

Furthermore, the positioning device 8 comprises an inertial measurement unit 14 provided on the vehicle body and a GPS positioning device 16 provided on the vehicle body.

In the embodiment, the composition of the positioning device 8 is further provided. The positioning device 8 comprises the inertial measurement unit 14 and the GPS positioning device 16. Through the combined use of the inertial measurement unit 14 and the GPS positioning device 16, and through the performance complementation of the inertial measurement unit 14 and the GPS positioning device 16, the positioning accuracy of the engineering vehicle is improved, and this helps the control device 12 get the position of the vehicle body, and helps the control device 12 control the vehicle body to park in the parking space 26.

### Embodiment 3

As shown in FIG. 1 to FIG. 2, an embodiment of the present invention provides an engineering vehicle autonomous parking system suitable for construction area, and it comprises: a vehicle unit and a marking unit, wherein the marking unit is movably or detachably provided in a construction area, and the marking unit records parking space information, and the vehicle unit comprises a vehicle body; a radar 4 provided on the vehicle body, wherein the radar 4 is adapted to obtain obstacle information; an information acquisition device 6 provided on the vehicle body, wherein the information acquisition device 6 is adapted to acquire the parking space information that the marking unit records and/or obtain obstacle information; a positioning device 8 provided on the vehicle body, wherein the positioning device 8 is adapted to obtain the vehicle position information of the vehicle body; a sensing device 10 provided on the vehicle body, wherein the sensing device 10 is adapted to obtain the operating information of a vehicle; and a control device 12 provided on the vehicle body, wherein the control device 12 is in communication connection with the radar 4, the information acquisition device 6, the positioning device 8, the sensing device 10 and the vehicle body; and the control device 12 is adapted to control the vehicle body to autonomously park in a parking space 26 based on the obstacle information, the vehicle position information, the parking space information and the operating information.

Furthermore, the sensing device 10 comprises: at least one of a wheel speed sensor 18, a steering angle sensor 20 and a steering torque sensor 22; and/or the information acquisition device 6 comprises an image acquisition device provided on the vehicle body, and/or a vehicle networking device, wherein an on-board unit of the vehicle networking device is provided on the vehicle body.

In the embodiment, the composition of the sensing device 10 is further provided, and the sensing device 10 comprises at least one of the wheel speed sensor 18, the steering angle sensor 20 and the steering torque sensor 22. During a working process, the wheel speed sensor 18 is adapted to obtain the wheel speed of the vehicle body, the steering angle sensor 20 is adapted to obtain the turning angle of the steering wheel of the vehicle body, and the steering torque sensor 22 is adapted to obtain the steering torque of the steering wheel. Through obtaining the wheel speed, the turning angle and the steering torque of the vehicle body, the travelling state of the vehicle body can be obtained, and then the control device 12 can provide control parameters based on the wheel speed, the turning angle and the steering torque of the vehicle body, and then the vehicle body travels along the parking path until the vehicle body parks in the parking space 26, thereby achieving the autonomous parking, and thus, the efficiency and the safety of parking is greatly improved.

Specifically, the control device 12 can comprise a computing device and a wire-controlled chassis device, and the wire-controlled chassis device is in communication connection with the computing device. During the parking process, the computing device determines the parking path through the parking space information, the obstacle information and the vehicle position information. The wire-controlled chassis device generates a throttle value for controlling the size of the throttle, a braking value for controlling the magnitude of braking and the turning angle of the steering wheel based on the parking path and the operating information, and then the vehicle body can travel along the parking path until the vehicle body parks in the parking space 26.

In the embodiment, the specific types of the information acquisition device 6 are further provided. The information acquisition device 6 can comprise the image acquisition device and/or the on-board unit of the vehicle networking device. When the information acquisition device 6 comprises the image acquisition information, a two-dimensional code mark can be disposed in the parking space 26, the two-dimensional code mark corresponds to the parking space information, then the image acquisition device acquires the two-dimensional code mark, and thus the parking space information can be obtained; when the information acquisition device 6 is the on-board unit, a road-side unit can be provided in the parking space 26, and the road-side unit is adapted to send the parking space information and the parking space information is thereby received when the on-board unit is close to the road-side unit.

Specifically, the image acquisition device is a 360-degree panoramic camera, and there can be multiple 360-degree panoramic cameras which are distributed on the front end, the rear end and the two sides of the vehicle body. The 360-degree panoramic cameras can further be used in combination with the radar 4 to obtain the obstacle information while they are used to obtain the parking space information. Through the arrangement of the multiple 360-degree panoramic cameras, the sensing range of the engineering vehicle becomes wider and this helps improve the convenience and the safety of the engineering vehicle parking.

### Embodiment 4

As shown in FIG. 1 and FIG. 2, an embodiment of the present invention provides an engineering vehicle autonomous parking system suitable for construction area, and it comprises: a vehicle unit and a marking unit, wherein the marking unit is movably or detachably provided in a construction area, and the marking unit records parking space information, and the vehicle unit comprises a vehicle body; a radar 4 provided on the vehicle body, wherein the radar 4 is adapted to obtain obstacle information; an information acquisition device 6 provided on the vehicle body, wherein the information acquisition device 6 is adapted to acquire the parking space information that the marking unit records and/or obtain obstacle information; a positioning device 8 provided on the vehicle body, wherein the positioning device 8 is adapted to obtain vehicle position information of the vehicle body; a sensing device 10 provided on the vehicle body, wherein the sensing device 10 is adapted to obtain the operating information of a vehicle; and a control device 12 provided on the vehicle body, wherein the control device 12 is in communication connection with the radar 4, the information acquisition device 6, the positioning device 8, the sensing device 10 and the vehicle body; and the control device 12 is adapted to control the vehicle body to autonomously park in a parking space 26 based on the obstacle information, the vehicle position information, the parking space information and the operating information.

Furthermore, the marking unit further comprises a movable pile 28, wherein the movable pile 28 is movably or detachably provided in the construction area; a two-dimensional code mark 24 provided on the movable pile 28, wherein the two-dimensional code mark 24 records the parking space information, and the information acquisition device 6 is adapted to acquire the parking space information that the two-dimensional code mark 24 records; and/or a road-side unit of a vehicle networking device provided on the movable pile 28, wherein the road-side unit records the parking space information, and the information acquisition device is adapted to acquire the parking space information that the road-side unit records.

In the embodiment, the composition of the marking unit is further provided. The marking unit comprises the movable pile 28 and the two-dimensional code mark 24 provided on the movable pile 28. Through the movable or detachable arrangement of the movable pile 28, the movable pile 28 is prevented from affecting the operation of engineering vehicles. Through the arrangement of the two-dimensional code mark 24 and/or the vehicle networking device, it helps the information acquisition device 6 of the vehicle unit acquire and obtain parking space information.

### Embodiment 5

As shown in FIG. 4, an embodiment according to the present invention provides an autonomous parking method for the engineering vehicle autonomous parking system according to any one of the above embodiments, and the method comprises:
Step 102: obtaining parking space information through an information acquisition device;
Step 104: analyzing the parking space information to obtain parking parameter information;
Step 106: determining a parking start-point according to the parking parameter information and the position information of an engineering vehicle;
Step 108: determining a parking path according to the parking parameter information and the parking start-point; and
Step 110: controlling the engineering vehicle to park in a parking space according to the parking path.

For the parking method provided by the present invention, in the parking process, the parking space information is acquired and obtained by the information acquisition device of the engineering vehicle, the parking space information is analyzed to obtain the parking space parameter information, parking start-point information is determined based on parking space parameter information and the position information of the engineering vehicle, furthermore, the parking path is determined based on the parking parameter information and the parking start-point, and thus, the control device of the engineering vehicle can control the vehicle body to park in the parking space along the parking path, the autonomous parking of the engineering vehicle is achieved and the efficiency and the safety of the engineering vehicle parking is greatly improved.

For the parking method provided by the present invention, the parking space information is acquired and obtained by the information acquisition device, and then the parking space information is analyzed to obtain the parking space parameter information; on the one hand, considering the harsh environment in the construction area of engineering vehicles, there are generally no clear or definite parking space markings at the parking space for an engineering vehicle, and thus, the information acquisition device is provided to acquire the parking space information, which helps the engineering vehicles obtain the parking space parameter information and further help the engineering vehicles autonomously park in the parking space; on the other hand, the timeliness and the speed of obtaining the parking space information are improved, and further analysis is performed to obtain the parking space parameter information to facilitate the parking of the engineering vehicle.

It can be understood that in the parking method provided by the present invention, the position of the parking start-point can be a point that coincides with the position of the engineering vehicle or other points by which the engineering vehicle can park in the parking space.

### Embodiment 6

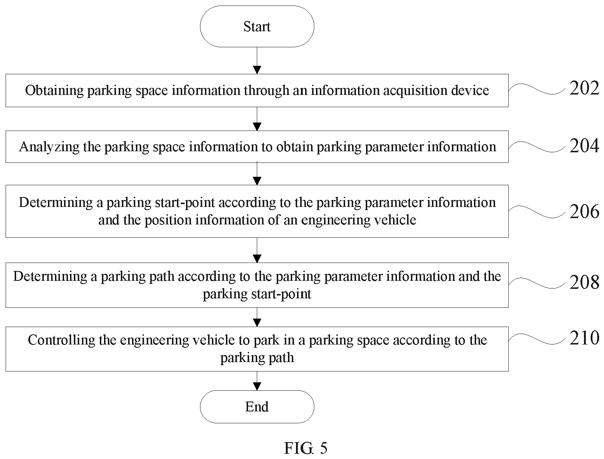

As shown in FIG. 5, an embodiment according to the present invention provides an autonomous parking method, and the method comprises:
Step 202: obtaining parking space information through an information acquisition device;
Step 204: analyzing the parking space information to obtain parking parameter information;
Step 206: determining a parking start-point according to the parking parameter information and the position information of an engineering vehicle;
Step 208: determining a parking path according to the parking parameter information and the parking start-point; and
Step 210: controlling the engineering vehicle to park in a parking space according to the parking path.

Furthermore, the parking parameter information comprises at least one type of parking space position information, parking space type information, parking space length information, parking space width information and parking space height information.

In the embodiment, the composition of the parking parameter information is further provided. The parking parameter information comprises at least one type of the parking space position information, the parking space type information, the parking space length information, the parking space width information and the parking space height information. The parking space position information is used to indicate the position of the parking space, and thus a control device of the engineering vehicle can park the engineering vehicle in the parking space based on the position of the vehicle and the parking space position information; the parking space type information specifically indicates the types of the parking space, for example, a parallel parking space, a vertical parking space and a diagonal parking space, for indicating the parking mode of the engineering vehicle; the parking space length information, the parking space width information and the parking space height information are used to indicate the size and the height of the parking space, and then prevent a portion of the engineering vehicles from going beyond the parking range of the parking space.

### Embodiment 7

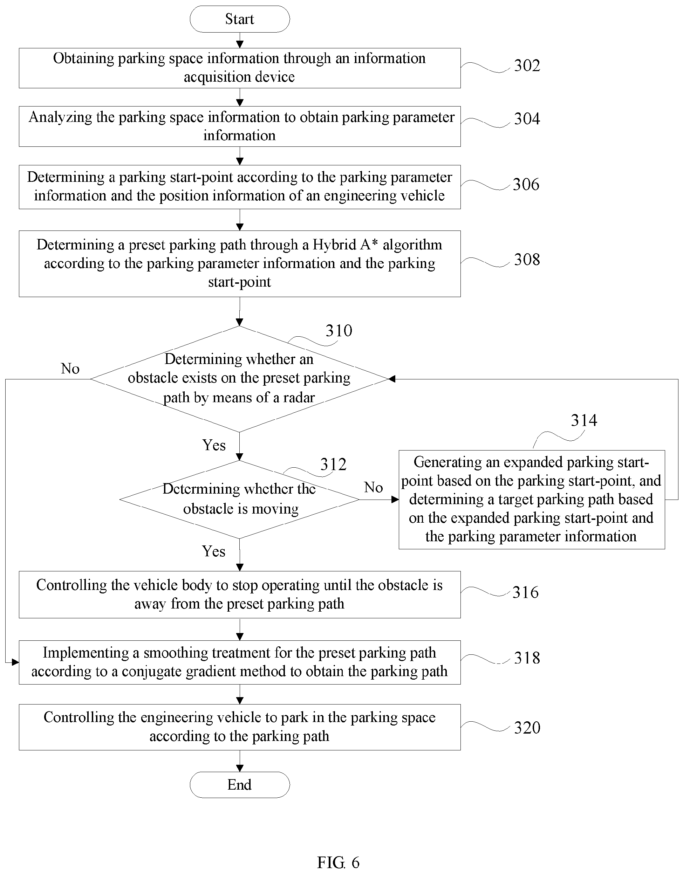

As shown in FIG. 6, an embodiment according to the present invention provides an autonomous parking method, and the method comprises:
Step 302: obtaining parking space information through an information acquisition device;
Step 304: analyzing the parking space information to obtain parking parameter information;
Step 306: determining a parking start-point according to the parking parameter information and the position information of an engineering vehicle;
Step 308: determining a preset parking path through a Hybrid A^{∗} algorithm according to the parking parameter information and the parking start-point;
Step 310: determining whether an obstacle exists on the preset parking path by means of a radar, then implementing Step 312 if there is an obstacle, or implementing Step 318 if there is not any obstacle;
Step 312: determining whether the obstacle is moving, then implementing Step 314 if it is not moving, or implementing Step 314 if it is moving;
Step 314: generating an expanded parking start-point based on the parking start-point, and determining a target parking path based on the expanded parking start-point and the parking parameter information, and then implementing Step 310;
Step 316: controlling the vehicle body to stop operating until the obstacle is away from the preset parking path, and then implementing Step 318;
Step 318: implementing a smoothing treatment for the preset parking path according to a conjugate gradient method to obtain the parking path; and
Step 320: controlling the engineering vehicle to park in the parking space according to the parking path.

Wherein, in the process of generating an expanded parking start-point based on the parking start-point, determining a target parking path based on the expanded parking start-point and the parking parameter information, and then implementing Step 310, the target parking path is taken as a new preset parking path.

In the embodiment, the specific steps for determining the parking path are further provided. The preset parking path is determined through the Hybrid A^{∗} algorithm according to the parking parameter information and the parking start-point. When a moving obstacle exists on the preset parking path, a smoothing treatment for the preset parking path is implemented after the obstacle is away from the preset parking path, and then the parking path is obtained; when the obstacle existing on the preset parking path does not move, the expanded parking start-point is generated and the target parking path is determined based on the expanded parking start-point and the parking parameter information, and until the obstacle does not exist on the target parking path, the smoothing treatment is implemented to the target parking path according to the conjugate gradient method to obtain the parking path; in the case that there is no obstacle on the preset parking path, the smoothing treatment is implemented to the preset parking path according to the conjugate gradient method, and then the parking path can be obtained. Through the above arrangement, a parking path free from any obstacle is finally obtained, and this helps the engineering vehicle park in the parking space safely and quickly.

### Embodiment 8

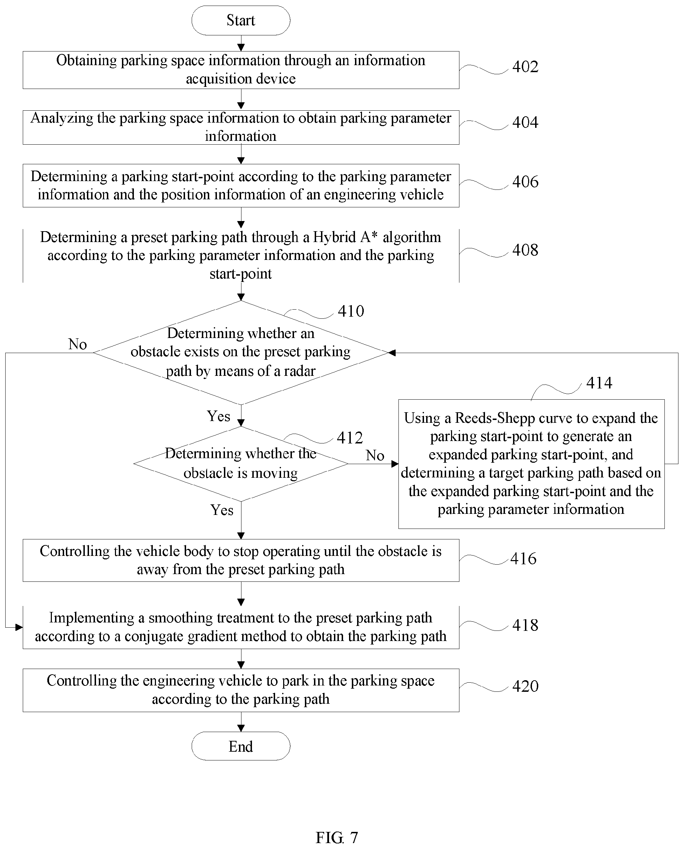

As shown in FIG. 7, an embodiment according to the present invention provides an autonomous parking method, and the method comprises:
Step 402: obtaining parking space information through an information acquisition device;
Step 404: analyzing the parking space information to obtain parking parameter information;
Step 406: determining a parking start-point according to the parking parameter information and the position information of an engineering vehicle;
Step 408: determining a preset parking path through a Hybrid A^{∗} algorithm according to the parking parameter information and the parking start-point;
Step 410: determining whether an obstacle exists on the preset parking path by means of a radar, then implementing Step 412 if there is an obstacle, or implementing Step 418 if there is not any obstacle;
Step 412: determining whether the obstacle is moving, then implementing Step 414 if it is not moving, or implementing Step 414 if it is moving;
Step 414: using a Reeds-Shepp curve to expand the parking start-point to generate an expanded parking start-point, and determining a target parking path based on the expanded parking start-point and the parking parameter information, and then implementing Step 410;
Step 416: controlling the vehicle body to stop operating until the obstacle is away from the preset parking path, and then implementing Step 418;
Step 418: implementing a smoothing treatment to the preset parking path according to a conjugate gradient method to obtain the parking path; and
Step 420: controlling the engineering vehicle to park in the parking space according to the parking path.

Wherein, in the process of generating an expanded parking start-point based on the parking start-point, determining a target parking path based on the expanded parking start-point and the parking parameter information, and then implementing Step 410, the target parking path is taken as a new preset parking path.

In the embodiment, the generating mode of the expanded parking start-point is further provided. Expanding the parking start-point by the Reeds-Shepp curve helps quickly generate the expanded parking start-point, and meanwhile, the newly generated expanded parking start-point is relatively close to the parking start-point and thus it is conducive to the quick parking of the engineering vehicle.

### Embodiment 9

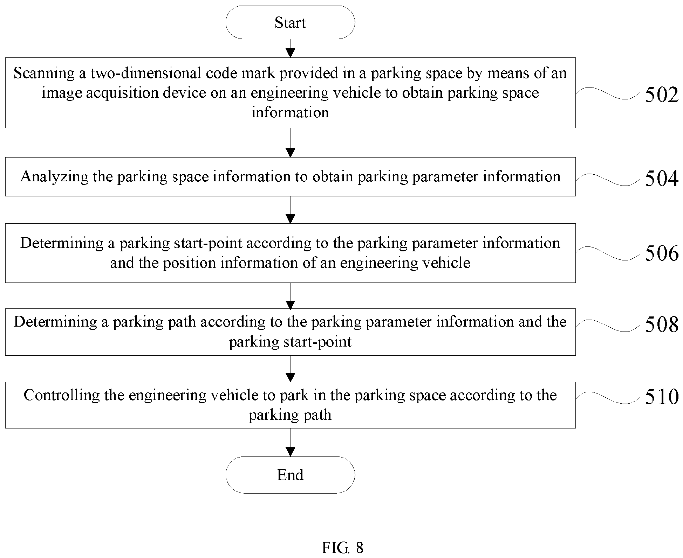

As shown in FIG. 8, an embodiment according to the present invention provides an autonomous parking method, and the method comprises:
Step 502: scanning a two-dimensional code mark provided in a parking space by means of an image acquisition device on an engineering vehicle to obtain parking space information;
Step 504: analyzing the parking space information to obtain parking parameter information;
Step 506: determining a parking start-point according to the parking parameter information and the position information of an engineering vehicle;
Step 508: determining a parking path according to the parking parameter information and the parking start-point; and
Step 510: controlling the engineering vehicle to park in the parking space according to the parking path.

The method for obtaining the parking space information is further provided. Through the cooperation of the image acquisition device and the two-dimensional code mark, the efficiency for obtaining the parking space information is improved.

Specifically, a benchmark can be provided in the parking space, the two-dimensional code mark is provided on the benchmark, and then the image acquisition device scans the two-dimensional code mark to obtain the parking space information.

### Embodiment 10

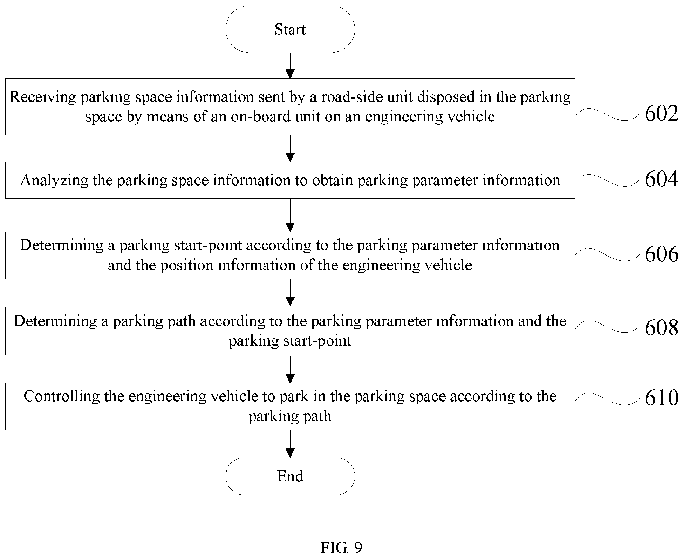

As shown in FIG. 9, an embodiment according to the present invention provides an autonomous parking method, and the method comprises:
Step 602: receiving parking space information sent by a road-side unit disposed in the parking space by means of an on-board unit on an engineering vehicle;
Step 604: analyzing the parking space information to obtain parking parameter information;
Step 606: determining a parking start-point according to the parking parameter information and the position information of the engineering vehicle;
Step 608: determining a parking path according to the parking parameter information and the parking start-point; and
Step 610: controlling the engineering vehicle to park in the parking space according to the parking path.

In the embodiment, the method for obtaining the parking space information is further provided. The parking space information is obtained through the mutual cooperation of the on-board unit and the road-side unit, and the efficiency for obtaining the parking space information is improved.

### Embodiment 11

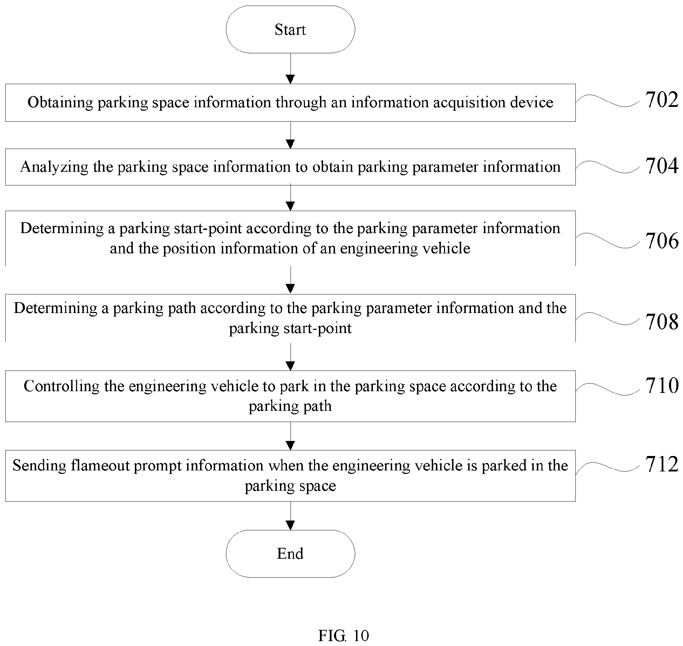

As shown in FIG. 10, an embodiment according to the present invention provides an autonomous parking method, and the method comprises:
Step 702: obtaining parking space information through an information acquisition device;
Step 704: analyzing the parking space information to obtain parking parameter information;
Step 706: determining a parking start-point according to the parking parameter information and the position information of an engineering vehicle;
Step 708: determining a parking path according to the parking parameter information and the parking start-point;
Step 710: controlling the engineering vehicle to park in the parking space according to the parking path; and
Step 712: sending flameout prompt information when the engineering vehicle is parked in the parking space.

In the embodiment, in the case that the engineering vehicle is parked in the parking space, flameout prompt information is sent, and this helps shut down engineering vehicles in time and save energy.

Specifically, when a driver is in the engineering vehicle, the driver can manually shut down the engineering vehicle after being informed of the flameout prompt information; if there is no driver in the engineering vehicle, the control device of the engineering vehicle can receive the flameout prompt information and shut down the engineering vehicle based on the flameout prompt information.

### Embodiment 12

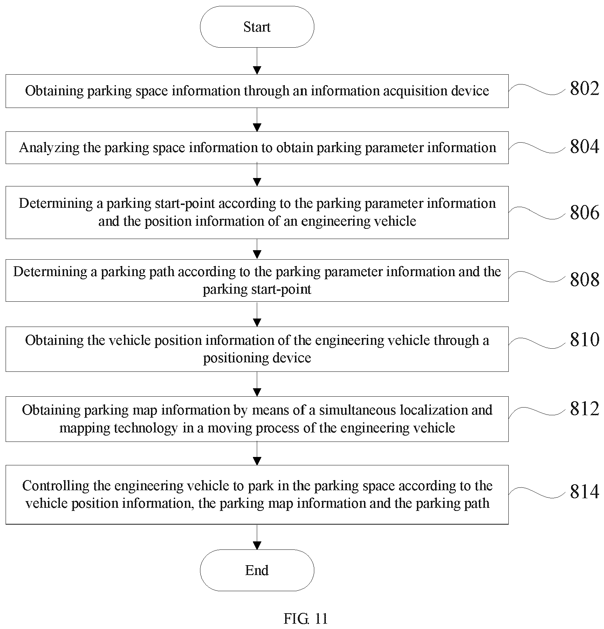

As shown in FIG. 11, an embodiment according to the present invention provides an autonomous parking method, and the method comprises:
Step 802: obtaining parking space information through an information acquisition device;
Step 804: analyzing the parking space information to obtain parking parameter information;
Step 806: determining a parking start-point according to the parking parameter information and the position information of an engineering vehicle;
Step 808: determining a parking path according to the parking parameter information and the parking start-point;
Step 810: obtaining the vehicle position information of the engineering vehicle through a positioning device;
Step 812: obtaining parking map information by means of a simultaneous localization and mapping technology in a moving process of the engineering vehicle; and
Step 814: controlling the engineering vehicle to park in the parking space according to the vehicle position information, the parking map information and the parking path.

In the embodiment, the specific steps for the engineering vehicle to park in the parking space are further provided. Through acquiring the vehicle position information, the parking map information is obtained by means of a simultaneous localization and mapping (SLAM) technology in a moving process of the engineering vehicle, and thus it is convenient to get the position of the engineering vehicle and the map information of the parking space, and it helps the engineering vehicle park in the parking space along the parking path, thereby achieving autonomous parking of the engineering vehicle, replacing the embodiments in which a traditional driver controls the parking of a vehicle, and thereby greatly improving the efficiency and the safety of parking.

### Specific embodiment

As shown in FIG. 1 and FIG. 2, an embodiment of the present invention provides an engineering vehicle autonomous parking system suitable for construction area, and it comprises: a vehicle body, a radar 4, an information acquisition device 6, a positioning device 8, a sensing device 10 and a control device 12.

Wherein, from the hardware level, the vehicle body is a mixer truck; the radar 4 comprises twelve supersonic wave radars; the information acquisition device 6 comprises four 360-degree panoramic cameras; the positioning device 8 comprises one inertial measurement unit (IMU) 14 and one GPS positioning device 16; the control device 12 comprises one wire-controlled chassis device and one computing unit, wherein the 360-degree panoramic cameras and the supersonic wave radars are used to detect and identify obstacles, the inertial measurement unit (IMU) 14 and the GPS positioning device 16 are used to determine the position of the mixer truck itself, the wire-controlled chassis device drives the mixer truck using electronic signals, and the computing unit is used for obstacle sensing, parking space positioning and identifying, autonomous path planning, vehicle controlling and etc.

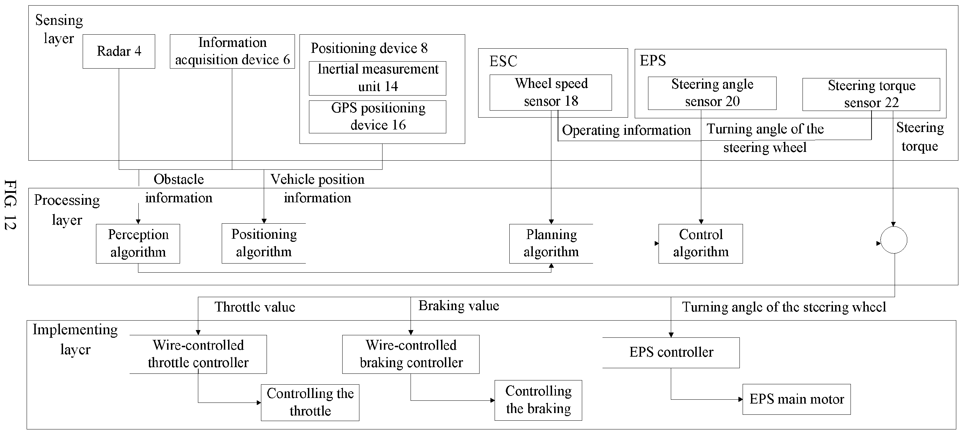

As shown in FIG. 12, wherein, from the software level, the engineering vehicle comprises a sensing layer, a processing layer and an implementing layer. The sensing layer comprises the supersonic wave radars, the 360-degree panoramic cameras, the inertial measurement unit (IMU) 14, the GPS positioning device 16, a wheel speed sensor 18, a steering angle sensor 20 and a steering torque sensor 22. The supersonic wave radars, the 360-degree panoramic cameras and the inertial measurement unit (IMU) 14 are used to obtain obstacle information and vehicle position information; the wheel speed sensor 18 is taken as a portion of the electronic stability control system (ESC) of the vehicle body and is used to obtain the wheel speed of the mixer truck; the steering angle sensor 20 and the steering torque sensor 22 are taken as a portion of the electronic power steering system (EPS) and are used to obtain the turning angle and the torque of the steering wheel; operating information which represents the kinematics parameters of the integral vehicle of the mixer truck can be obtained through the wheel speed sensor 18, the steering angle sensor 20 and the steering torque sensor 22. The processing layer comprises a perception algorithm, a positioning algorithm, a planning algorithm and a control algorithm, which are used to generate a parking path through the computing unit of the control device 12 and are used for a throttle value, a braking value and the turning angle of the steering wheel which control the operation of the mixer truck; and the implementing layer comprises a wire-controlled throttle controller, a wire-controlled braking controller and an EPS controller; the throttle controller, the wire-controlled braking controller and the EPS controller are controlled to work through the throttle value, the braking value and the turning angle of the steering wheel generated by the wire-controlled chassis device of the control device 12 through the computing unit, and then the mixer truck is parked in the parking space 26 according to the parking path.

In view of this, the present embodiment provides a parking method for the above mentioned engineering vehicle. The position information and the information of the length, the width and the height of the parking space 26 are obtained through scanning a two-dimensional code mark 24 on a movable pile 28 beside the parking space 26 with a camera of the engineering vehicle. The autonomous parking of the mixer truck in a complex construction environment is achieved by means of technologies such as positioning by the two-dimensional code mark 24, image identification, autonomous path planning and controlling and the wire-controlled chassis, and thus the drivers' working intensity is lowered and the operation safety of the mixer truck is improved, and the specific steps are provided as follows:
Step S1 marking the parking space: a mobile pile is temporarily erected behind or on the side of each parking space in a construction area, and the two-dimensional code mark of the parking space is pasted on the mobile pile; the two-dimensional code mark comprises parking space position information, the parking space type (a parallel parking space, a vertical parking space and a diagonal parking space), the length, the width and the height (for avoiding mixer trucks of some specifications which go beyond the height of special parking spaces) of the parking space and etc.; unless the construction parking space is changed, this step only needs to be implemented once, wherein the parking space position information is the global position coordinates of an electronic fence; the parking space types comprise the parallel parking space, the vertical parking space, and the diagonal parking space;
Step S2 searching the parking space: after a mixer truck drives to the construction area, a driver presses a parking button, and the panoramic sensor of the mixer truck scans the surrounding two-dimensional code mark by 360 degrees, if the two-dimensional code mark on the movable pile can be scanned and the read message format is consistent with a specified format, it indicates that the parking space can be used for parking, otherwise it cannot be used for parking, if an irrelevant two-dimensional code mark is scanned and recognized, it should be ignored;
Step S3 positioning the parking space: after the automatic parking system successfully scans the two-dimensional code mark for parking, the global position coordinates of the electronic fence, and the length, the width and the height of the parking space can be obtained, and thus the position of the parking space is determined; and then, the mixer truck will move to an optimal parking start-point, and furthermore, a SLAM (instant positioning and mapping) task is implemented according to the relative positioning information provided by integrated navigation;
Step S4 autonomous parking: the mixer truck adopts the Hybrid A^{∗} algorithm to plan a smoothly transitioning parking path and the vehicle is autonomously parked at the parking space indicated by the two-dimensional code mark;
Step S5 identifying obstacles: during the parking process, the parking assistant system of the mixer truck automatically identifies pedestrians, bicycles, electric vehicles, motorcycles, cone buckets and other obstacles on the parking path, and then avoids the obstacles or terminates the parking; and
Step S6 user interaction: when the parking is over, the driver is reminded to turn off the engine; in the case of a special circumstance that autonomous parking cannot be achieved, the driver is reminded to take over the vehicle.

Wherein, the Hybrid A^{∗} algorithm is provided as follows:

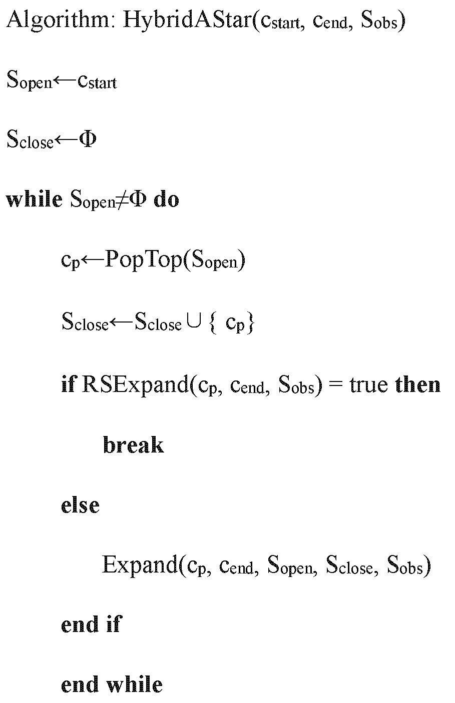

Wherein, cₛₜₐᵣₜ represents a parking start-point, c_{end} represents a parking terminal, cₚ represents points to be examined, Sobs represents a collection of obstacle points, Sopen represents a collection of opening points (points to be examined), S_{close} represents a collection of closed points (examined points), and Φ represents an empty collection; the PopTop(Sₒₚₑₙ) function means searching a point with the smallest cost function value with respect to the current point of the vehicle and the parking terminal from the collection Sₒₚₑₙ of points to be examined as the current examination point, and deleting the point from Sopen at the same time; RSExpand(cp, c_{end}, Sobs) means that if a Reeds-Shepp curve from the current point cₚ to the parking terminal c_{end} can be established, the vehicle can travel from the current point to the terminal smoothly, and the parking can be ended; Expand(cp, c_{end}, Sopen, Sciose, Sobs) means taking the current point cₚ as the start-point, using the Reeds-Shepp curve to expand the sub-nodes that meet the kinematics characteristics of the mixer truck, and adding these sub-nodes to the Sₒₚₑₙ collection.

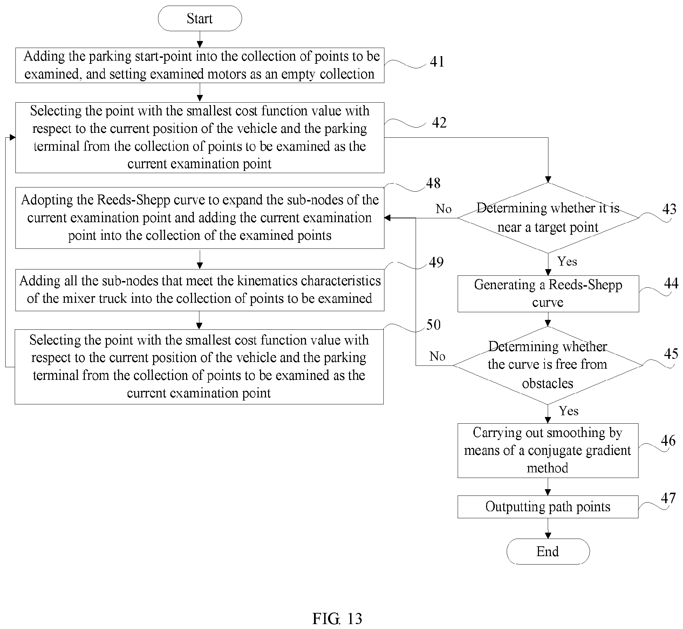

As shown in FIG. 13, specifically, in step S4, the step that the mixer truck adopts the Hybrid A^{∗} algorithm to plan a smoothly transitioning parking path specifically comprises:
Step 41: adding the parking start-point into the collection of points to be examined, and setting examined motors as an empty collection;
Step 42: selecting the point with the smallest cost function value with respect to the current position of the vehicle and the parking terminal from the collection of points to be examined as the current examination point;
Step 43: determining whether it is near a target point, if it is, implementing Step 44, if it is not, implementing Step 48;
Step 44: generating a Reeds-Shepp curve;
Step 45: determining whether the curve is free from obstacles, if it is, implementing Step 46, if it is not, implementing Step 48;
Step 46: carrying out smoothing by means of a conjugate gradient method;
Step 47: outputting path points;
Step 48: adopting the Reeds-Shepp curve to expand the sub-nodes of the current examination point and adding the current examination point into the collection of the examined points;
Step 49: adding all the sub-nodes that meet the kinematics characteristics of the mixer truck into the collection of points to be examined; and
Step 50: selecting the point with the smallest cost function value with respect to the current position of the vehicle and the parking terminal from the collection of points to be examined as the current examination point, and implementing step 42.

It can be understood that the information acquisition device can further be an on-board unit, and a road-side unit is installed at the rear or the side of the parking space. Based on a signal receiving device, with the help of the parking space information provided by the RSU to the OBU, the parking assistant system of the mixer truck can further identify the parking space and complete the parking. The costs and the complexity of the solution may be higher than that of the present invention.

In the specification of the present invention, the terms of "one embodiment", "some embodiments", "specific embodiment" and the like mean that the specific features, structures, materials or characteristics described in combination with the embodiment or example are contained in at least one embodiment or example of the present invention. In the specification, the illustrative expression of the above terms may not indicate the same embodiment or example. In addition, the specific features, structures, materials or characteristics described above may be combined in an appropriate method in one or more of any embodiments or examples.

The above-mentioned are merely some preferred embodiments of the present disclosure and not intended to limit the present invention, and for one skilled in the art, various modifications and changes may be made to the present invention. Any modifications, equivalent substitutions, improvements and so on made within the spirit and principle of the present invention should be covered within the scope of protection of the present disclosure.

## Claims

1. An engineering vehicle autonomous parking system suitable for construction area, comprising: a vehicle unit and a marking unit;
wherein the marking unit is movably or detachably provided in a construction area, and the marking unit records parking space information; and
the vehicle unit comprises:
a vehicle body;
a radar provided on the vehicle body, wherein the radar is adapted to obtain obstacle information;
an information acquisition device provided on the vehicle body, wherein the information acquisition device is adapted to acquire the parking space information that the marking unit records and/or obtain obstacle information;
a positioning device provided on the vehicle body, wherein the positioning device is adapted to obtain vehicle position information of the vehicle body;
a sensing device provided on the vehicle body, wherein the sensing device is adapted to obtain operating information of a vehicle; and
a control device provided on the vehicle body, wherein the control device is in communication connection with the radar, the information acquisition device, the positioning device, the sensing device and the vehicle body; and the control device is adapted to control the vehicle body to autonomously park in a parking space based on the obstacle information, the vehicle position information, the parking space information and the operating information.

2. The engineering vehicle autonomous parking system according to claim 1, wherein the positioning device comprises:
an inertial measurement unit, provided on the vehicle body; and
a GPS positioning device, provided on the vehicle body.

3. The engineering vehicle autonomous parking system according to claim 1, wherein
the sensing device comprises at least one of a wheel speed sensor, a steering angle sensor and a steering torque sensor; and/or
the information acquisition device comprises:
an image acquisition device provided on the vehicle body; and/or
a vehicle networking device, wherein an on-board unit of the vehicle networking device is provided on the vehicle body.

4. The engineering vehicle autonomous parking system according to claim 3, wherein the marking unit further comprises:
a movable pile, wherein the movable pile is movably or detachably provided in the construction area;
a two-dimensional code mark, provided on the movable pile;
wherein the two-dimensional code mark records the parking space information, and the information acquisition device is adapted to acquire the parking space information that the two-dimensional code mark records; and/or
a road-side unit of a vehicle networking device provided on the movable pile;
wherein the road-side unit records the parking space information, and the information acquisition device is adapted to acquire the parking space information that the road-side unit records.

5. An autonomous parking method for the engineering vehicle autonomous parking system suitable for construction area according to any one of claims 1 to 4, comprising:
obtaining parking space information through an information acquisition device;
analyzing the parking space information to obtain parking parameter information;
determining a parking start-point according to the parking parameter information and the position information of an engineering vehicle;
determining a parking path according to the parking parameter information and the parking start-point; and
controlling the engineering vehicle to park in a parking space according to the parking path.

6. The autonomous parking method according to claim 5, wherein
the parking parameter information comprises at least one type of parking space position information, parking space type information, parking space length information, parking space width information and parking space height information.

7. The autonomous parking method according to claim 5, wherein, the step of determining a parking path based on the parking parameter information and the parking start-point specifically comprises:
determining a preset parking path through a Hybrid A^{∗}algorithm according to the parking parameter information and the parking start-point;
determining whether an obstacle exists on the preset parking path by means of a radar;
in the case that an obstacle exists on the preset parking path, determining whether the obstacle is moving;
in the case that the obstacle does not move, generating an expanded parking start-point based on the parking start-point, and determining a target parking path based on the expanded parking start-point and the parking parameter information;
in the case that the obstacle is moving, controlling the vehicle body to stop operating until the obstacle is away from the preset parking path, and implementing a smoothing treatment for the preset parking path according to a conjugate gradient method to obtain the parking path; and
in the case that there is no obstacle on the preset parking path, implementing a smoothing treatment for the preset parking path according to a conjugate gradient method to obtain the parking path;
wherein, generating an expanded parking start-point based on the parking start-point comprises:
using a Reeds-Shepp curve to expand the parking start-point to generate an expanded parking start-point.

8. The autonomous parking method according to any one of claims 5 to 7, wherein, obtaining the parking space information comprises:
scanning a two-dimensional code mark provided in a parking space by means of an image acquisition device on an engineering vehicle to obtain parking space information; or
receiving parking space information sent by a road-side unit of the vehicle networking device disposed in the parking space by means of an on-board unit of the vehicle networking device on an engineering vehicle.

9. The autonomous parking method according to any one of claims 5 to 7, further comprising:
sending flameout prompt information when the engineering vehicle is parked in the parking space.

10. The autonomous parking method according to any one of claims 5 to 7, wherein, the step of controlling the engineering vehicle to park in the parking space according to the parking path specifically comprises:
obtaining the vehicle position information of the engineering vehicle through the positioning device;
obtaining parking map information by means of a simultaneous localization and mapping technology in a moving process of the engineering vehicle; and
controlling the engineering vehicle to park in the parking space according to the vehicle position information, the parking map information and the parking path.
